# EUROPÄISCHE PATENTSCHRIFT

(11) **EP 3 207 276 B1**
(45) Veröffentlichungstag und Bekanntmachung des Hinweises auf die Patenterteilung: **22.12.2021**
(21) Anmeldenummer: 15763329.8
(22) Anmeldetag: 15.09.2015
(51) Int. Cl.: F16F 15/12, F16F 15/123, F16H 45/02

(54) **SCHWINGUNGSREDUZIERUNGSEINRICHTUNG**
VIBRATION REDUCTION DEVICE
DISPOSITIF DE RÉDUCTION DE VIBRATIONS

(30) Priorität: 15.10.2014 DE 102014220899
(43) Veröffentlichungstag der Anmeldung: 23.08.2017
(73) Patentinhaber: ZF Friedrichshafen AG, 88046 Friedrichshafen (DE)
(72) Erfinder: WIRACHOWSKI, Michael, 97078 Würzburg (DE); SUDAU, Joerg, 97464 Niederwerrn (DE)
(74) Vertreter: ZF Friedrichshafen AG
(86) Internationale Anmeldenummer: PCT/EP2015/070996
(87) Internationale Veröffentlichungsnummer: WO 2016/058763

(56) Entgegenhaltungen:
- EP-A2- 2 600 030
- US-A1- 2009 247 307

## Beschreibung

Die vorliegende Erfindung betrifft eine Schwingungsreduzierungseinrichtung einer Kopplungsanordnung, die einen Torsionsschwingungsdämpfer mit einem an einen Antrieb angebundenen Eingang aufweist, der mittels Ansteuerelementen zur Beaufschlagung eines Energiespeichersystems zumindest einer Dämpfungseinheit des Torsionsschwingungsdämpfers in Umfangsrichtung dient, und zur Abstützung des Energiespeichersystems der Dämpfungseinheit nach radial außen eine Führung aufweist, die mit den in den Erstreckungsbereich des Energiespeichersystems ragenden Ansteuerelementen zusammenwirkt, um das Energiespeichersystem in Umfangsrichtung beaufschlagen zu können. Der Eingang des Torsionsschwingungsdämpfers verfügt sowohl über die Führung als auch über die Ansteuerelemente für das Energiespeichersystem der Dämpfungseinheit.

Eine derartige Schwingungsreduzierungseinrichtung einer Kopplungsanordnung ist aus der DE 11 2006 002 111 T5 entnehmbar. Im Hinblick auf die Schwingungsreduzierungseinrichtung wirkt das Gehäuse dieser Kopplungsanordnung, die mit Pumpen-, Turbinen- und Leitrad ausgebildet ist, als Antrieb. Die Schwingungsreduzierungseinrichtung verfügt über einen Torsionsschwingungsdämpfer mit zwei Dämpfungseinheiten, die mit Radialversatz zueinander angeordnet sind. Der Eingang des Torsionsschwingungsdämpfers ist durch einen am Gehäuse befestigten Bügel sowie durch eine an dem Bügel drehfest angreifende radial äußere Nabenscheibe gebildet, wobei die letztgenannte zur Aufnahme eines Energiespeichersystems der radial äußeren Dämpfungseinheit dient, und für dieses Energiespeichersystem die Wirkung als Führung sowie als Ansteuerelement entfaltet. Der Ausgang des Torsionsschwingungsdämpfers ist indes mit einem Reibscheiben-Elemententräger der Kupplungseinrichtung verbunden, der über Reibscheibenelemente mit einem weiteren Reibscheiben-Elemententräger der Kupplungseinrichtung in Wirkverbindung gebracht werden kann. Der letztgenannte Reibscheiben-Elemententräger, der über eine Verbindung mit dem Turbinenrad verfügt, ist an einer Nabe befestigt, die als Abtrieb der Schwingungsreduzierungseinrichtung wirksam ist, und in Drehverbindung mit einer Abtriebswelle, wie beispielsweise einer Getriebeeingangswelle stehen kann.

Bei der bekannten Kopplungsanordnung ist die radial äußere Dämpfungseinheit in demjenigen Radialbereich angeordnet, in welchem der durch Pumpen-, Turbinenund Leitrad gebildete hydrodynamische Kreis über eine maximale Ausdehnung in Achsrichtung verfügt. Durch kleineren Durchmesser am Energiespeichersystem dieser Dämpfungseinheit wird versucht, die Schwingungsreduzierungseinrichtung in diesem Bereich kompakt auszuführen. Die radial innere Dämpfungseinheit nutzt dagegen den größeren axialen Bauraum radial innerhalb des hydrodynamischen Kreises, so dass diese Dämpfungseinheit über ein Energiespeichersystem größeren Durchmessers verfügen kann. Beiden Dämpfungseinheiten gemeinsam ist, dass die Energiespeichersysteme jeweils in hierfür vorgesehenen Fenstern von Nabenscheiben sowie von Deckscheiben aufgenommen sind. Da derartige Fenster eine Schwächung der Naben- und/oder Deckscheiben bewirken, ist deren Ausdehnung insbesondere in Umfangsrichtung begrenzt, so dass nur Energiespeichersysteme mit relativ bescheidenem Verformungsvolumen verwendet werden können. In Verbindung mit der Anordnung beider Dämpfungseinheiten in vergleichsweise kleinem Radialabstand gegenüber einer Zentralachse der Kopplungsanordnung ist die mit einem derartigen Torsionsschwingungsdämpfer erzielbare Entkopplungsgüte ungeeignet, um höheren Ansprüchen bei der Dämpfung von Torsionsschwingungen gerecht zu werden.

Der Torsionsschwingungsdämpfer der bekannten Kopplungsanordnung ist zwar zur Reduzierung von Torsionsschwingungen, die dem eingeleiteten Drehmoment überlagert sind, geeignet, vermag aber keine Wirkung zu entfalten im Hinblick auf Anregungen, deren Ordnung von der Zylinderzahl einer Brennkraftmaschine abhängig sind.

Um bei derartigen Anregungen eine Wirkung zu entfalten, ist eine Schwingungsreduzierungseinrichtung zu bevorzugen, die über ein Tilgersystem verfügt. Eine derartige Schwingungsreduzierungseinrichtung ist aus der DE 10 2011 076 790 A1, Fig. 3, entnehmbar. Abweichend von der zuvor behandelten Kopplungsanordnung ist hier allerdings die Kupplungseinrichtung zwischen dem Gehäuse der Kopplungsanordnung und der Schwingungsreduzierungseinrichtung angeordnet, und daher mit dem Eingang des Torsionsschwingungsdämpfers verbunden, dessen Ausgang mit einem Abtrieb, realisiert als Torsionsschwingungs-Dämpfernabe, in Wirkverbindung steht. Das bereits genannte Tilgersystem ist an den Ausgang des Torsionsschwingungsdämpfers angebunden.

Bei Torsionsschwingungsdämpfern, deren Ausgang mit einem Tilgersystem verbunden ist, besteht selbst unter Volllast bei sehr geringer Drehzahl, beispielsweise bei einer Drehzahl um 1000 Umdrehungen pro Minute, der Vorteil sehr geringer Drehungleichförmigkeit. Diesem Vorteil steht allerdings entgegen, dass bei höherer Drehzahl, beispielsweise innerhalb eines Drehzahlbereiches zwischen 1500 und 1800 Umdrehungen pro Minute, ein deutlicher Anstieg der Drehungleichförmigkeit zu verzeichnen ist. Dieser Anstieg der Drehungleichförmigkeit geht einher mit stark abfallenden Auslenkwinkeln am Ausgang des Torsionsschwingungsdämpfers, auch wenn am Eingang des Torsionsschwingungsdämpfers Torsionsschwingungen anliegen. Dieses Verhalten des Torsionsschwingungsdämpfers, dessen Ausgang dann zumindest näherungsweise in einem Schwingungsknoten verweilt, ist durch Effekte aus der Getriebeanordnung bedingt. Besonders nachteilig ist das Verweilen des Ausgangs des Torsionsschwingungsdämpfers in einem Schwingungsknoten, weil hierdurch die Schwingungsanregungen fehlen, welche für die Funktion von Tilgermassen des mit dem Ausgang der Dämpfungseinrichtung verbundenen Tilgersystems dringend benötigt würden. Dies gilt insbesondere im Hinblick auf den zuvor genannten deutlichen Anstieg der Drehungleichförmigkeit.

Bei Anordnung der Kupplungseinrichtung zwischen dem Gehäuse der Kopplungsanordnung und der Schwingungsreduzierungseinrichtung besteht dann, wenn die Kupplungseinrichtung mit Schlupf wirksam ist, ein Drehzahlunterschied zwischen den am Antrieb anliegenden Anregungen und den am Tilgersystem anliegenden Anregungen, was Einfluss nimmt auf die resultierende Anregungsordnung des Tilgersystems. Würde das Tilgersystem zum Ausgleich auf eine höhere Ordnung ausgelegt werden, dann hätte dies zur Folge, dass sich die Entkopplungsgüte bei allen Betriebszuständen, bei welchen kein nennenswerter Schlupf anliegt, verschlechtert. Die Auslegung des Tilgersystems ist unter diesen Umständen problematisch.

Was den Torsionsschwingungsdämpfer betrifft, so zeigt die DE 10 2011 076 790 A1 in Fig. 7 eine Ausführung mit zwei mit Radialversatz zueinander angeordneten Dämpfungseinheiten. Bei der radial äußeren Dämpfungseinheit ist der Eingang des Torsionsschwingungsdämpfers über eine Kupplungseinrichtung mit dem als Antrieb wirksamen Gehäuse verbunden, und wird durch eine Nabenscheibe gebildet, die mit Ansteuerelementen in den Erstreckungsbereich eines Energiespeichersystems der radial äußeren Dämpfungseinheit eingreift. Eine als Ausgang der radial äußeren Dämpfungseinheit sowie als Eingang der radial inneren Dämpfungseinheit wirksame Zwischenübertragung ist im radial äußeren Bereich derart geformt, dass sie das Energiespeichersystem der radial äußeren Dämpfungseinheit in Achsrichtung teilweise übergreift, und hierbei das Energiespeichersystem entlang eines Teils seiner Axialerstreckung mit einem an die Außenkontur des Energiespeichersystems formlich angepassten Führungsbereich umgibt. Die Andeutung einer radial nach außen verlaufenden Wandung des Gehäuses zeigt allerdings, dass diese Wandung beabstandet zur Führung verläuft. Die Führung muss also über eine Wandstärke verfügen, die geeignet ist, fliehkraftbedingte Radialkräfte des Energiespeichersystems aufzunehmen. Dies zwingt zu einer nach radial innen versetzten Anordnung des Energiespeichersystems der radial äußeren Dämpfungseinheit, womit eine Begrenzung des Federvolumens dieses Energiespeichersystems einhergeht. Verstärkt wird dieser Effekt noch dadurch, dass der im Gehäuse der Kopplungsanordnung vorhandene radiale Bauraum aufgrund der Beabstandung der Führung gegenüber der Wandung des Gehäuses nicht völlig ausgeschöpft ist. Dies wirkt sich nachteilig auf die Entkopplungsgüte des Torsionsschwingungsdämpfers aus.

Des Weiteren ist aus der US 2009 / 247 307 A1 eine Dämpfervorrichtung zur Dämpfung von Schwingungen bei der Übertragung von Drehmomenten bekannt geworden, die mehrere unterschiedlich dimensionierte Dämpferfedern umfasst.

Weiterhin zeigt die EP 2 600 030 A2 einen Drehmomentwandler, umfassend ein Zwei-Massen-Schwungrad mit einem Energiespeichersystem, einem weiteren Energiespeichersystem, einer Turbinenanordnung sowie einem Fliehkraftpendel.

Der Erfindung liegt die Aufgabe zugrunde, eine Schwingungsreduzierungseinrichtung einer Kopplungsanordnung derart auszubilden, dass eine optimale Entkopplungsgüte erzielbar ist.

Diese Aufgabe wird durch eine Schwingungsreduzierungseinrichtung einer Kopplungsanordnung gemäß Anspruch 1 gelöst.

Die Schwingungsreduzierungseinrichtung verfügt hierbei über einen Torsionsschwingungsdämpfer und einen mit einem Antrieb verbundenen Eingang, der mittels Ansteuerelementen zur Beaufschlagung eines Energiespeichersystems zumindest einer Dämpfungseinheit des Torsionsschwingungsdämpfers in Umfangsrichtung dient, und zur Abstützung des Energiespeichersystems der Dämpfungseinheit nach radial außen eine Führung aufweist, die mit den in den Erstreckungsbereich des Energiespeichersystems ragenden Ansteuerelementen zusammenwirkt, um das Energiespeichersystem in Umfangsrichtung beaufschlagen zu können, wobei der Eingang des Torsionsschwingungsdämpfers sowohl über die Führung als auch über die Ansteuerelemente für das Energiespeichersystem der Dämpfungseinheit verfügt. Der Eingang des Torsionsschwingungsdämpfers ist an dem Antrieb befestigt, und die Führung umgibt das Energiespeichersystem zumindest entlang eines Teils der jeweiligen Axialerstreckung mit einem an die Außenkontur des Energiespeichersystems formlich angepassten Führungsbereich.

Aufgrund der anspruchsgemäßen Ausbildung der Schwingungsreduzierungseinrichtung ist der Eingang des Torsionsschwingungsdämpfers nicht nur zur Ansteuerung des Energiespeichersystems einer Dämpfungseinheit geeignet, sondern vermag darüber hinaus aufgrund der Ausbildung mit einer Führung dieses Energiespeichersystem nach radial außen abzustützen, und aufgrund der Anpassung des Führungsbereichs der Führung an die Außenkontur des Energiespeichersystems in Achsrichtung zu positionieren. Bedingt durch die Befestigung des Eingangs des Torsionsschwingungsdämpfers am Antrieb entsteht somit eine räumliche Zuordnung des Energiespeichersystems zum Antrieb. Die Kopplungsanordnung verfügt über ein Gehäuse und kann dies für den Torsionsschwingungsdämpfer als

Antrieb wirksam sein, so dass eine räumliche Zuordnung des Energiespeichersystems zum Gehäuse vorliegt.

Das Gehäuse weist weiter im radialen Außenbereich eine Wandung auf, und die Befestigung des Eingangs des Torsionsschwingungsdämpfers erfolgt an einem Gehäuseabschnitt des Gehäuses, der in einer Distanz gegenüber der Wandung im radialen Außenbereich des Gehäuses vorgesehen ist, wobei diese Distanz derart gewählt ist, dass die Führung durch die im radialen Außenbereich des Gehäuses vorliegende Wandung eine Abstützung nach radial außen erfährt. Dann vermag sich die am Eingang vorgesehene Führung unter der Wirkung von fliehkraftbedingter Axialkraft in Richtung nach radial außen an der Wandung im radialen Außenbereich des Gehäuses abzustützen. Damit vermag die Führung auch dann die benötigte Formsteifigkeit aufrecht zu erhalten, wenn deren Wandstärke sehr gering sein sollte und/oder die Führung aus Federstahl bestehen sollte, wobei letzteres Vorteile im Hinblick auf Verschleißarmut verschaffen kann.

Insbesondere dann, wenn die Wandstärke der Führung sehr gering ist, und die Führung zur Anlage an der Wandung im radialen Außenbereich des Gehäuses kommt oder kommen kann, ist das dieser Führung zugeordnete Energiespeichersystem soweit als möglich gegenüber einer Zentralachse der Kopplungsanordnung nach radial außen verlagert, so dass es das größtmögliche Verformungsvolumen bei vorzugsweise geringer Steifigkeit bereitstellen kann, was eine hohe Entkopplungsgüte begünstigt. Das Energiespeichersystem wird erfindungsgemäß weiter nach radial außen verlagert, indem das Gehäuse für die Abstützung der Führung nach radial außen über eine Einbuchtung verfügt, in welche die Führung zumindest entlang eines Teils ihrer Axialerstreckung eintaucht.

Mit Vorzug weist der Eingang des Torsionsschwingungsdämpfers einen zur Befestigung an dem Gehäuseabschnitt des Gehäuses vorgesehenen Basisbereich auf, von welchem ausgehend sich sowohl die Führung als auch die Ansteuerelemente in Richtung zu dem Energiespeichersystem der Dämpfungseinheit erstrecken. Der Basisbereich verfügt vorzugsweise über Ausnehmungen, die zur Aufnahme jeweils einer die Befestigung am Gehäuseabschnitt realisierenden Verbindungseinrichtung vorgesehen sind. Als Verbindungseinrichtungen sind hierbei insbesondere Niete oder Schweißpunkte denkbar.

Entweder ist der Eingang des Torsionsschwingungsdämpfers einstückig ausgebildet, und umgreift vorzugsweise ringförmig die Zentralachse der Kopplungsanordnung mit vorbestimmtem Abstand, oder aber der Eingang des Torsionsschwingungsdämpfers verfügt über eine Mehrzahl von Eingangssegmenten mit in Umfangsrichtung begrenzter Ausdehnung, bei welchen sich die Ausnehmungen für die jeweilige Verbindungseinrichtung und/oder die Ansteuerelemente jeweils an den umfangsseitigen Enden oder zumindest im umfangsseitigen Erstreckungsbereich dieser Enden befinden.

Mit besonderem Vorzug ist die anspruchsgemäße Schwingungsreduzierungseinrichtung mit einem den Torsionsschwingungsdämpfer ergänzenden Tilgersystem ausgebildet, welches mit dem Ausgang des Torsionsschwingungsdämpfers verbunden ist. Gerade für eine derartige Schwingungsreduzierungseinrichtung ist es von Vorteil, wenn deren Ausgang über eine Kupplungseinrichtung mit einem Abtrieb, wie einer Getriebeeingangswelle, verbunden ist. Bei einer derartigen konstruktiven Ausgestaltung fehlt nämlich eine Kupplungseinrichtung zwischen dem Antrieb, beispielweise dem Gehäuse der Kopplungsordnung, und dem Tilgersystem, das somit allein über den Torsionsschwingungsdämpfer mit dem Antrieb verbunden ist. Dadurch ist sichergestellt, dass die am Antrieb anliegende Anregung stets drehzahlgleich mit derjenigen Anregung ist, die am Tilgersystem anliegt. Dadurch kann eine exakte Auslegung des Tilgersystems auf die jeweilige Ordnung erfolgen, wobei diese Auslegung durch die jeweilige Betriebsweise der Kupplungseinrichtung, insbesondere bei Schlupf, unbeeinflusst ist.

Gleichzeitig kann an der Kupplungseinrichtung ein Schlupf gezielt eingesetzt werden, um eine ungünstige Entkopplungsleistung des Tilgersystems zumindest teilweise zu beheben. Ein Schlupf vermag an einen Antriebsstrang, insbesondere hierbei an ein Getriebe, abgegebene Drehungleichförmigkeiten zu reduzieren. Dies gilt insbesondere dann, wenn durch Anbindung des Tilgersystems an den Ausgang des Torsionsschwingungsdämpfers bei höherer Drehzahl, beispielsweise innerhalb eines Drehzahlbereiches zwischen 1500 und 1800 Umdrehungen pro Minute, ein deutlicher Anstieg der Drehungleichförmigkeit zu verzeichnen ist. Die Kupplungseinrichtung könnte somit in diesem Drehzahlbereich mit gezieltem Schlupf betrieben werden.

Da der Ausgang der Schwingungsreduzierungseinrichtung nicht unmittelbar, sondern über die Kupplungseinrichtung an dem Abtrieb angreift, muss zur Gewährleistung der Funktion der Kupplungseinrichtung eine Relativdrehbewegbarkeit zumindest des Ausgangs der Schwingungsreduzierungseinrichtung in Bezug zum Abtrieb sichergestellt sein. Der Torsionsschwingungsdämpfer mag daher zwar an dem Abtrieb, gegebenenfalls auch an dem Antrieb, zentriert sein, jedoch muss in Umfangsrichtung eine Relativdrehbewegbarkeit vorliegen. Insbesondere bei Torsionsschwingungsdämpfern mit einer Mehrzahl an Dämpfungseinheiten können auch andere Bauteile des jeweiligen Torsionsschwingungsdämpfers, wie beispielsweise eine die Dämpfungseinheiten untereinander verbindende Zwischenübertragung, in vergleichbarer Weise am Abtrieb oder gegebenenfalls an einem Antrieb, aufgenommen sein.

Wenn die Kupplungseinrichtung zur Übertragung hoher Drehmomente mit einer Mehrzahl an Reibscheibenkupplungen ausgebildet ist, sind die letztgenannten mit besonderem Vorzug jeweils in Reibscheiben-Kupplungshaltern aufgenommen, von denen einer mit dem Ausgang der Schwingungsreduzierungseinrichtung drehfest ist, und ein anderer mit dem Abtrieb.

Die Erfindung ist anhand der nachfolgenden Beschreibung anschaulich behandelt. Es zeigt:
Fig. 1 eine Schnittdarstellung durch eine Kopplungsanordnung, die als hydrodynamischer Drehmomentwandler ausgebildet ist, und eine über Torsionsschwingungsdämpfer und Tilgersystem verfügende Schwingungsreduzierungseinrichtung sowie eine Kupplungseinrichtung, die mit dem Ausgang der Schwingungsreduzierungseinrichtung verbunden ist, aufweist;
Fig. 2 wie Fig. 1, aber mit einer Schnittdarstellung an einer anderen Stelle der Kopplungsanordnung;
Fig. 3 Umfangssegmente einer dem Eingang des Torsionsschwingungsdämpfers zugeordneten Führung mit Ausnehmungen zur Aufnahme von Verbindungseinrichtungen an den umfangsseitigen Enden;
Fig. 4 Umfangssegmente wie in Fig. 3, aber mit Ausnehmungen zur Aufnahme von Verbindungseinrichtungen im umfangsseitigen Erstreckungsbereich der umfangsseitigen Enden;
Fig. 5 eine Draufsicht auf das Tilgersystem aus der Blickrichtung V ― V der Fig. 1 bei Betriebszustand;
Fig. 6 wie Fig. 5, aber mit dem Tilgersystem bei Ruhezustand.

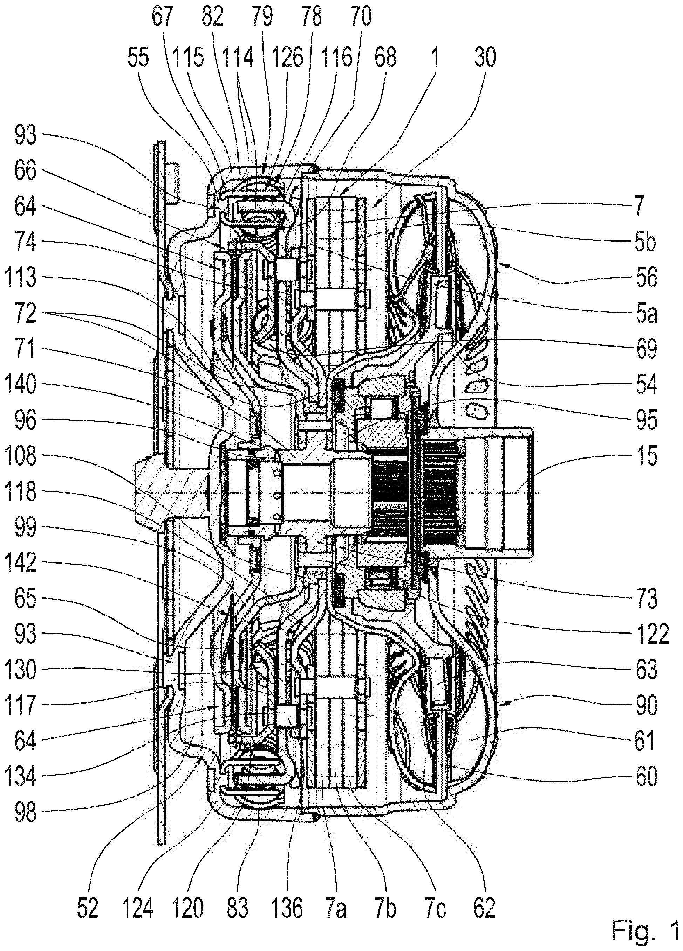

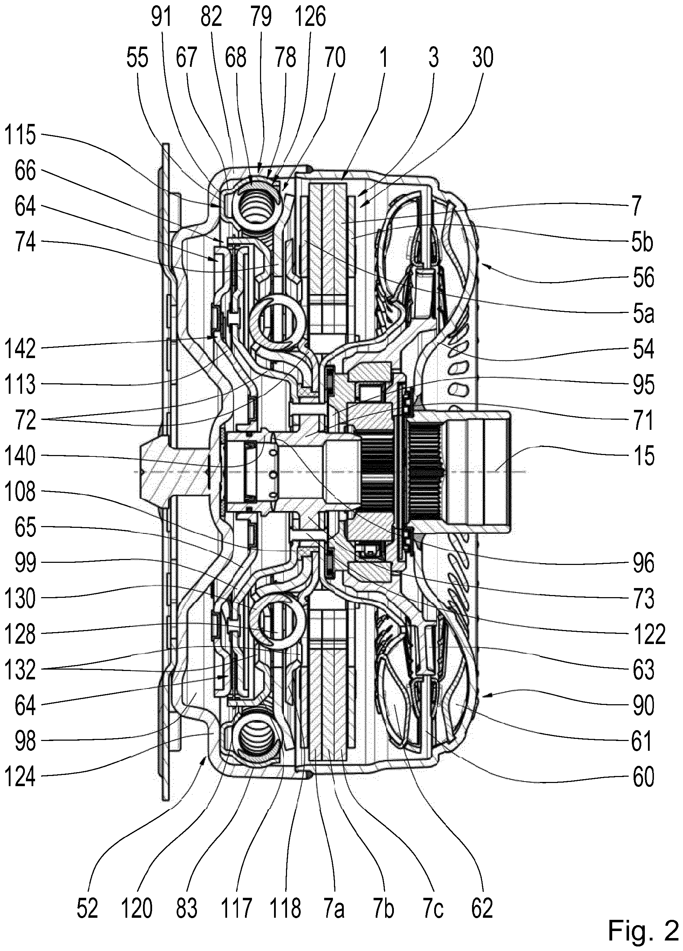

Fig. 1 und 2 zeigen eine Kopplungsanordnung 56, die über ein um eine Zentralachse 15 drehbares Gehäuse 54 verfügt und, da als hydrodynamischer Drehmomentwandler 90 ausgebildet, einen hydrodynamischen Kreis 60 mit Pumpenrad 61, Turbinenrad 62 und Leitrad 63 aufweist. Weiterhin ist die Kopplungsanordnung 56 mit einer Schwingungsreduzierungseinrichtung 30 und mit einer Kupplungseinrichtung 64 versehen, wobei die Schwingungsreduzierungseinrichtung 30 über einen Torsionsschwingungsdämpfer 70 und ein Tilgersystem 1 verfügt.

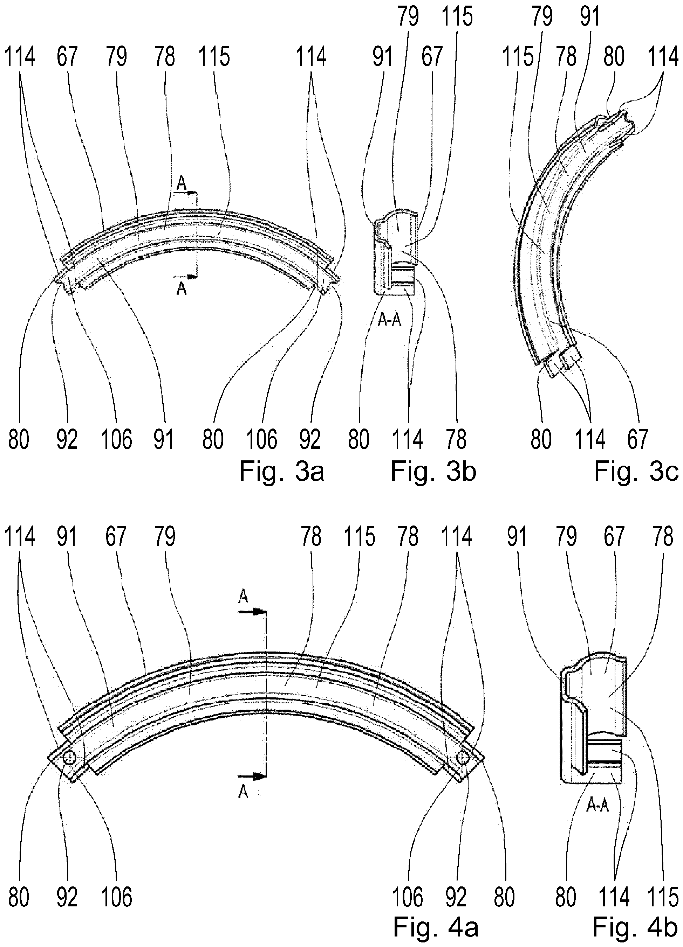

An einem Gehäusedeckel 124 des Gehäuses 54 der Kopplungsanordnung 56 ist ein Gehäuseabschnitt 55 zur Befestigung eines Eingangs 67 des Torsionsschwingungsdämpfers 70 vorgesehen. Der Eingang 67 greift mit im Wesentlichen parallel zueinander verlaufenden, sich jeweils in vom Gehäusedeckel 124 fortweisender Richtung erstreckenden Ansteuerfingern 114 in den Querschnitts-Erstreckungsbereich eines radial äußeren Energiespeichersystems 126, wobei je zwei Ansteuerfinger 114 jeweils als Ansteuerelement 80 wirksam sind. Der Eingang 67 kann in Umfangsrichtung einstückig ausgebildet sein, indem er die Zentralachse 15 in vorbestimmter radialer Distanz umgibt, oder aber er kann, wie die Figuren 3 und 4 erkennen lassen, mit einer Mehrzahl von Eingangssegmenten 115 ausgebildet sein, welche die Zentralachse 15 in vorbestimmter radialer Distanz und mit vorbestimmten Umfangsabständen zueinander umgeben. Die Befestigung des Eingangs 67 oder der Eingangssegmente 115 am Gehäusedeckel 124 erfolgt in vergleichbarer Weise, indem jeweils ein Basisbereich 91 (Fig. 2 bis 4) vorgesehen ist, welcher an dem Gehäusedeckel 124 zur Anlage gelangt, und mit Ausnehmungen 92 (Fig. 3, 4) versehen ist, die von Verbindungseinrichtungen 93 (Fig. 1) durchgriffen sind. Gemäß Fig. 1 werden diese Verbindungseinrichtungen 93 durch Niete gebildet, die mittels plastischer Verformung von der Außenseite des Gehäusedeckels 124 aus in Richtung zum Eingang 67 oder zum Eingangssegment 115 verdrängt werden, um hierbei die jeweils zugeordnete Ausnehmung 92 zu durchdringen. Anschließend wird mit einer Verformung aus der Gegenrichtung der Niet fertiggestellt. Eine derartig hergestellte Nietverbindung ist druckdicht, was im Bereich des Gehäusedeckels 124 erforderlich ist. Alternativ können aber auch in den Ausnehmungen 92 gesetzte Schweißpunkte jeweils als Verbindungseinrichtungen 93 genutzt werden.

Zurückkommend auf die Ausnehmungen 92, sind diese, was die Eingangssegmente 115 betrifft, entweder jeweils an deren umfangsseitigen Enden 106 (Fig. 3) vorgesehen, oder aber im umfangsseitigen Erstreckungsbereich dieser Enden 106 (Fig. 4). Im erstgenannten Fall sind die Ausnehmungen 92 als von umfangsseitig außen in den Basisbereich 91 eingreifende Einkerbungen ausgebildet, während im letztgenannten Fall Bohrungen vorgesehen sind, welche den Basisbereich 91 durchdringen.

Am Eingang 67 ist, jeweils in Umfangsrichtung zwischen Ansteuerelementen 80, ein an einer Führung 78 vorgesehener Führungsbereich 79 für die Energiespeicher des radial äußeren Energiespeichersystems 126 vorgesehen. Durch diese Führung 78 wird den Energiespeichern des radial äußeren Energiespeichersystems 126 dann, wenn diese durch fliehkraftbedingt auftretende Radialkräfte nach außen gedrückt werden, eine Radialabstützung geboten. Der Führungsbereich 79 dieser Führung 78 ist zudem in seinem radialen Außenbereich (Fig. 1, 2) in Richtung seiner Axialerstreckung formlich an die Außenkontur der Energiespeicher des radial äußeren Energiespeichersystems 126 angepasst, so dass hierdurch auch eine Positionierung des Energiespeichersystems 126 in Achsrichtung erzielt wird.

Das Gehäuse 54 der Kopplungsanordnung 56 weist in seinem radialen Außenbereich eine Wandung 82 auf, die zumindest im axialen Erstreckungsbereich der größten Radialausdehnung von Führung 78 und radial äußerem Energiespeichersystem 126 über eine Einbuchtung 83 verfügt, in welche die Führung 78 entlang eines Teils ihrer Axialerstreckung eintaucht. Dies setzt voraus, dass der Gehäuseabschnitt 55, an welchem der Eingang 67 befestigt ist, sich in einer axialen Distanz gegenüber der Wandung 82 befindet, dass die Führung 78 sich zumindest bei nach radial außen wirkenden Radialkräften in die Einbuchtung 83 hineinbewegen kann, um sich innerhalb dieser Einbuchtung 83 an der Wandung 82 des Gehäuses 54 radial abstützen zu können. Diese konstruktive Ausgestaltung ermöglicht es, die Energiespeicher des radial äußeren Energiespeichersystems 126 radial soweit als möglich nach außen zu verlagern. Zudem kann die Führung 78 mit geringem Materialquerschnitt ausgebildet sein, insbesondere bei Ausbildung aus Federwerkstoff, welcher bei geringem Materialquerschnitts-Erfordernis einen vergleichsweise geringen Verschleiß mit sich bringt. Die letztgenannte Maßnahme wird möglich, wenn sich die Führung 78 des Eingangs 67 radial nach außen an der Wandung des Gehäuses 54 abstützen kann. Hierdurch ergibt sich eine weitere Möglichkeit, die Energiespeicher des radial äußeren Energiespeichersystems 126 radial soweit als möglich nach außen zu verlagern.

Die Maßnahmen zur Verlagerung der Energiespeicher des radial äußeren Energiespeichersystems 126 radial soweit als möglich nach außen dient dem Ziel, ein möglichst hohes Verformungsvolumen in das radial äußere Energiespeichersystem 126 bei gleichzeitig geringer Steifigkeit des Energiespeichersystems 126 einzubringen. Hierdurch wird eine hohe Entkopplungsgüte des Torsionsschwingungsdämpfers 70 und damit der Schwingungsreduzierungseinrichtung 30 erzielt.

Radial zwischen die beiden Ansteuerfinger 114 des Eingangs 67 greifen jeweils Ansteuerelemente 116 (Fig. 1) einer Zwischenübertragung 74, wobei die Ansteuerelemente 116 der Zwischenübertragung in zum Gehäusedeckel 124 weisender Richtung in den Querschnitts-Erstreckungsbereich des radial äußeren Energiespeichersystems 126 ragen. Die Zwischenübertragung 74 verläuft, zumindest im Wesentlichen, nach radial innen, um im radial inneren Bereich in Energiespeicherfenstern 128 (Fig. 2) Energiespeicher eines radial inneren Energiespeichersystems 130 aufzunehmen. Axial beidseits der Zwischenübertragung 74 sind Ausgangsbauteile 117, 118 vorgesehen, die über Energiespeicherfenster 132 für die Energiespeicher des radial inneren Energiespeichersystems 130 verfügen. Die Ausgangsbauteile 117, 118 sind durch eine in Achsrichtung mit mehreren Außenabschnitten unterschiedlichen Außendurchmessers angeordneten Lagerung 108 sowie durch Abstandsstücke 134 (Fig. 1) auf vorbestimmter Axialdistanz zueinander und zur Zwischenübertragung 74 gehalten, wobei die Abstandsstücke 134 Ausnehmungen in der Zwischenübertragung 74 mit Spiel in Umfangsrichtung durchgreifen. Wenn die Abstandsstücke 134 bei einer Relativdrehauslenkung von Zwischenübertragung 74 und Ausgangsbauteilen 117, 118 die in Auslenkrichtung folgenden Enden der Ausnehmungen erreicht haben, endet die Relativdrehauslenkung. Die Abstandsstücke 134 wirken demnach als Relativdrehwinkelbegrenzung 136.

Der Eingang 67 bildet gemeinsam mit dem radial äußeren Energiespeichersystem 126 und der Zwischenübertragung 74 eine antriebsseitige erste Dämpfungseinheit 68 des Torsionsschwingungsdämpfers 70, während die Zwischenübertragung 74 gemeinsam mit dem radial inneren Energiespeichersystem 130 und den Ausgangsbauteilen 117, 118 eine abtriebsseitige zweite Dämpfungseinheit 69 des Torsionsschwingungsdämpfers 70 bildet.

Sowohl die Zwischenübertragung 74 als auch das Ausgangsbauteil 118 sind jeweils auf der einer Torsionsschwingungs-Dämpfernabe 71 zugeordneten Lagerung 108 zentriert und axial positioniert, können sich aber in Umfangsrichtung sowohl gegenüber der Lagerung 108 als auch zueinander relativ bewegen.

Für die Schwingungsreduzierungseinrichtung 30 ist das Gehäuse 54 der Kopplungsanordnung 56 als Antrieb 52 wirksam, und die Ausgangsbauteile 117, 118 jeweils als Ausgang 72. Der Ausgang 72 ist an der als Abtrieb 73 wirksamen Torsionsschwingungs-Dämpfernabe 71 zentriert, die ihrerseits mittels einer nicht gezeigten Verzahnung an einer Abtriebswelle, wie einer Getriebeeingangswelle, aufgenommen ist.

Die Torsionsschwingungs-Dämpfernabe 71 stützt sich axial am Gehäusedeckel 124 ab, und zentriert einen Kupplungskolben 65 der Kupplungseinrichtung 64 axial verlagerbar. Alternativ kann aber auch ein von der Torsionsschwingungs-Dämpfernabe 71 unabhängiges Bauteil zur Zentrierung des Kupplungskolbens 65 vorgesehen sein, wobei dieses Bauteil über die Torsionsschwingungs-Dämpfernabe 71 gelagert und an diese angebunden sein kann. Unabhängig davon_ist der Kupplungskolben 65 mittels einer Axialfederung 142 drehfest an einem Aufnahmebauteil 113 der Kupplungseinrichtung 64 befestigt, das ebenso wie das Turbinenrad 62 mittels einer Vernietung 122 an der Torsionsschwingungs-Dämpfernabe 71 befestigt ist. In Abhängigkeit von der Ansteuerung des Kupplungskolbens 65 in Bezug zum Aufnahmebauteil 113 ist der Kupplungskolben 65 entlang der Torsionsschwingungs-Dämpfernabe 71 axial verlagerbar, wobei seine Bewegung in Richtung zum Aufnahmebauteil 113 durch einen Axialanschlag 140 begrenzt wird. Bewegt sich der Kupplungskolben 65 in Richtung zum Aufnahmebauteil 113, dann fährt er in einem ersten Betriebszustand seine Einrückposition an, während der Kupplungskolben 65 infolge einer Bewegung in Gegenrichtung in einem zweiten Betriebszustand seine Ausrückposition anfährt.

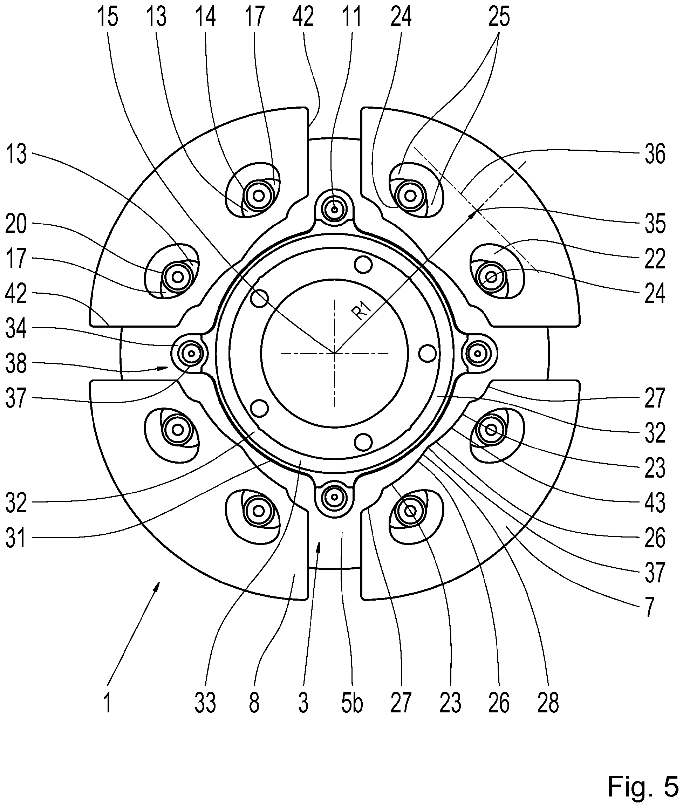

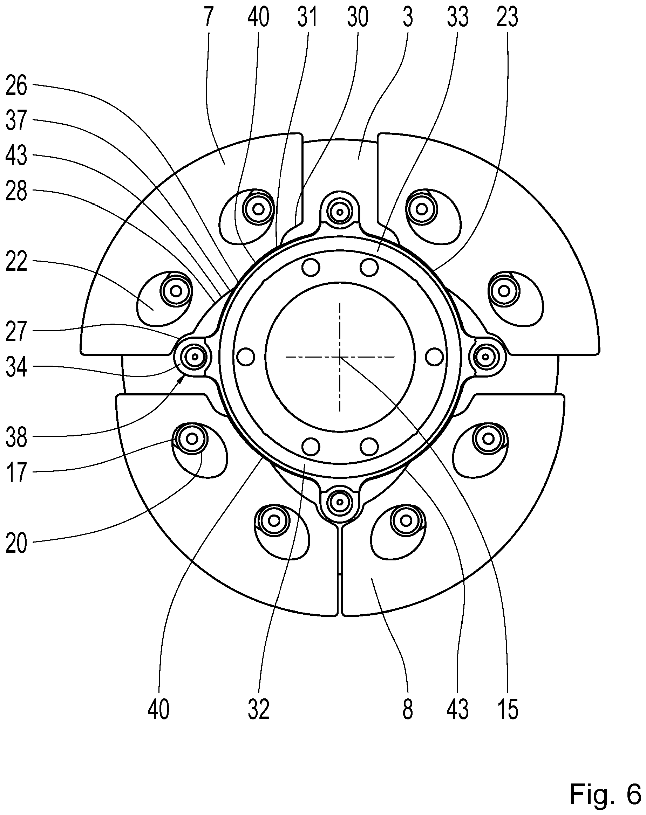

Zurückkommend auf die Schwingungsreduzierungseinrichtung 30, nimmt der Torsionsschwingungdämpfer 70 an seinem dem Turbinenrad 62 zugewandten Ausgangsbauteil 118 für eine Zweitfunktion dieses Ausgangsbauteils 118 ein Tilgermassen-Trägerelement 5a eines Tilgermassenträgers 3 des Tilgersystems 1 auf, das mit einem zweiten Tilgermassen-Trägerelement 5b mittels Abstandsstücken in fester axialer Distanz drehfest verbunden ist. Die beiden Tilgermassen-Trägerelemente 5a, 5b nehmen axial zwischen sich Tilgermassen 7 mit einer Mehrzahl an Tilgermassenelementen 7a bis 7c auf. Wie nachfolgend noch ausführlich erläutert wird, dienen die Abstandsstücke 11 in einer Zweitfunktion jeweils zur Aufnahme eines ringförmigen Bauteils 32 (Fig. 5, 6). Das vom Turbinenrad 62 abgewandte Ausgangsbauteil 117 dient, ebenfalls für eine Zweitfunktion, als Reibscheiben-Kupplungsträger 120, an welchem eine axial zwischen Kupplungskolben 65 und Aufnahmebauteil 113 eingreifende Reibscheibenkupplung 66 drehfest, aber axial verlagerbar, aufgenommen ist. Da die Ausgangsbauteile 117, 118 jeweils Teil des Ausgangs 72 sind, ist somit sowohl das Tilgersystem 1 als auch die Kupplungseinrichtung 64 jeweils mit dem Ausgang 72 verbunden.

Wenn der Kupplungskolben 65 der Kupplungseinrichtung 64 in einem ersten Betriebszustand in Richtung zum Aufnahmebauteil 113 bewegt werden soll, um eine Verbindung zwischen dem Antrieb 52 und dem Abtrieb 73 herzustellen, dann wird mittels einer nicht gezeigten Druckquelle über eine erste Leitung 95 Druckmittel in den hydrodynamischen Kreis 60 und damit auch in einen ersten Druckraum 98 geleitet, der sich axial zwischen dem Gehäusedeckel 124 und dem Kupplungskolben 65 erstreckt. Dadurch entsteht im ersten Druckraum 98 ein Überdruck gegenüber dem zweiten Druckraum 99, der sich an der Gegenseite des Kupplungskolbens 65, also zwischen demselben und dem Aufnahmebauteil 113 befindet. Der Kupplungskolben 65 wird hierdurch in Richtung zum Aufnahmebauteil 113 verlagert, und klemmt hierbei die Reibscheibenkupplung 66 zwischen sich und dem Aufnahmebauteil 113 zunehmend stärker. Während dieser Bewegung des Kupplungskolbens 65 wird im zweiten Druckraum 99 enthaltenes Druckmittel über eine bei diesem Betriebszustand drucklose zweite Leitung 96 aus dem zweiten Druckraum 99 abgeführt, und gelangt dann in einen nicht gezeigten Druckmittelvorrat.

Für eine Bewegung des Kupplungskolbens 65 in seinem zweiten Betriebszustand wird der Kupplungskolben 65 in vom Aufnahmebauteil 113 fortweisender Richtung bewegt, um die Verbindung zwischen dem Antrieb 52 und dem Abtrieb 73 wieder aufzuheben. Hierzu wird mittels der nicht gezeigten Druckquelle über die zweite Leitung 96 Druckmittel in den zweiten Druckraum 99 geleitet, wodurch dort ein Überdruck gegenüber dem ersten Druckraum 98 entsteht. Der Kupplungskolben 65 wird hierdurch in vom Aufnahmebauteil 113 fortweisender Richtung verlagert, und gibt hierbei die Reibscheibenkupplung 66 zwischen sich und dem Aufnahmebauteil 113 zunehmend mehr frei. Während dieser Bewegung des Kupplungskolbens 65 wird im ersten Druckraum 98 enthaltenes Druckmittel über die bei diesem Betriebszustand drucklose erste Leitung 95 aus dem ersten Druckraum 98 abgeführt, und gelangt dann in den nicht gezeigten Druckmittelvorrat. Wegen der zwei vorhandenen Leitungen 95 und 96 wird die in Fig. 1 gezeigte Koppelanordnung 56 in Fachkreisen als Zwei-Leitungssystem bezeichnet.

Die Axialfeder 142 ist entweder so ausgelegt, dass sie versucht, den Kupplungskolben 65 auf Abstand zum Aufnahmebauteil 113 zu halten, oder aber sie ist so ausgelegt, dass sie versucht, den Kupplungskolben 65 in Richtung zum Aufnahmebauteil 113 zu drücken. Im erstgenannten Fall können eventuelle Schleppverluste reduziert werden, die bei Anhaftung der Reibscheibenkupplung 66 am Kupplungskolben 65 oder am Aufnahmebauteil 113 bei zumindest teilweise ausgerücktem Kupplungskolben 65 entstehen können, während im letztgenannten Fall ein geringeres Druckgefälle zwischen dem ersten Druckraum 98 und dem zweiten Druckraum 99 genügt, um die Kupplungseinrichtung 64 in ihrem ersten Betriebszustand in Einrückposition zu halten. Darüber hinaus vermag die Axialfeder 142 Druckänderungen entgegenzuwirken, die sich strömungsbedingt schlagartig einstellen können. Dadurch wird ein stoßärmeres Einrücken der Kupplungseinrichtung 64 begünstigt.

Torsionsschwingungen bzw. Anregungen, die zusammen mit einem am Gehäuse 54 anliegenden Drehmoment vom Gehäuse 54 über den Eingang 67 auf den Torsionsschwingungsdämpfer 70 übertragen werden, werden zum einen durch die Dämpfungseinheiten 68, 69 gedämpft, und zum anderen durch das Tilgersystem 1 getilgt. Wegen der unmittelbaren Anbindung des Tilgersystems 1 über den Torsionsschwingungsdämpfer 70 an das Gehäuse 54 und damit an den Antrieb 52 ist sichergestellt, dass die am Tilgersystem 1 anliegende Anregung stets drehzahlgleich mit derjenigen Anregung ist, die am Antrieb 52 anliegt. Dadurch kann eine exakte Auslegung des Tilgersystems 1 auf die mit dem Antrieb 52 verknüpfte Ordnung erfolgen.

Sofern sich bei dem Torsionsschwingungsdämpfer 70, bei welchem eine Verbindung des Ausgangs 72 mit dem Tilgersystem 1 besteht, am Ausgang 72 zumindest annähernd ein Schwingungsknoten auswirkt, dann besteht die Möglichkeit, an der Kupplungseinrichtung 64 einen Schlupf gezielt einzusetzen, mit der Folge, dass eine stärkere Drehungleichförmigkeit an der Kupplungseinrichtung 64 und somit zumindest am Ausgang 72 des Torsionsschwingungsdämpfers 70 anliegt, die für eine hinreichend günstige Entkopplungsleistung des Tilgersystems 1 benötigt wird. Da die Kupplungseinrichtung 64 hierbei hinter dem Tilgersystem 1 vorgesehen ist, bleibt das Tilgersystem 1 trotz dieser Maßnahme unbeeinflusst auf die mit dem Antrieb 52 verknüpfte Ordnung ausgelegt.

Zum Tilgersystem 1 ist folgendes auszuführen:
Zugunsten besserer Darstellbarkeit der am Tilgermassenträger 3 aufgenommenen Tilgermassen 7 ist in den Fig. 5 und 6 jeweils das in Blickrichtung axial vor den Tilgermassen 7 angeordnete Tilgermassen-Trägerelement 5a entfernt, und lediglich das in Blickrichtung axial hinter den Tilgermassen 7 angeordnete Tilgermassen-Trägerelement 5b abgebildet. Die Tilgermassen 7 verfügen über jeweils paarweise ausgebildete Führungsbahnen 22 zur Aufnahme von jeweils als Rollkörper ausgebildeten Koppelelementen 20, wobei die Führungsbahnen 22 derart ausgelegt sind, dass sie eine radiale Relativbewegung der Tilgermassen 7 gegenüber den Koppelelementen 20 ermöglichen. Die Tilgermassen 7 weisen, radial innen an ihre Umfangsseiten 42 angrenzend, Anschlagseiten 43 auf.

An den Tilgermassen-Trägerelementen 5a und 5b sind, ebenfalls jeweils paarweise, Führungsbahnen 13 vorgesehen, die über einen gekrümmten Verlauf verfügen. Gemäß Darstellung in Fig. 5 oder 6 verfügen die Führungsbahnen 13 über je einen Ausgangsbereich 14, in welchem die jeweilige Führungsbahn 13 den größten Radialabstand von einer Zentralachse 15 aufweist, und über Anschlussbereiche 17, die sich, einander umfangsmäßig entgegengesetzt erstreckend, an beide Seiten des Ausgangsbereiches 14 anschließen. Auch die an den Tilgermassen 7 vorgesehenen Führungsbahnen 22 verfügen über einen gekrümmten Verlauf, mit je einem Ausgangsbereich 24, in welchem die jeweilige Führungsbahn 22 den geringsten Radialabstand von der Zentralachse 15 aufweist, und mit Anschlussbereichen 25, die sich, einander umfangsmäßig entgegengesetzt erstreckend, an beide Seiten des Ausgangsbereiches 24 anschließen. Die Führungsbahnen 22 sind jeweils beidseits eines Tilgermassenzentrums 35 der jeweiligen Tilgermasse vorgesehen. Dieses Tilgermassenzentrum 35 befindet sich in einem mittleren Erstreckungsradius 36 der Tilgermassen 7, der bei Fahrbetrieb in einem Abstand R1 gegenüber der Zentralachse 15 angeordnet ist. Der Zustand der Tilgermassen 7 bei Fahrbetrieb ist in Fig. 5 gezeigt, und liegt dann vor, wenn das Tilgersystem 1 mit einer Drehzahl betrieben wird, bei welcher die Fliehkraft die Gewichtskraft übersteigt.

Die in den Führungsbahnen 13 und 22 aufgenommenen Koppelelemente 20 greifen jeweils beidseits der jeweiligen Führungsbahn 22 in die dort vorgesehenen Führungsbahnen 13 ein. In der Darstellung gemäß Fig. 5 streben die Tilgermassen 7, bedingt durch die Fliehkraft, nach radial außen, so dass sich die Koppelelemente 20 jeweils im Ausgangsbereich 24 der jeweiligen Führungsbahn 22 positionieren, also in demjenigen Bereich, der über den geringsten Radialabstand zur Zentralachse 15 verfügt. Die Koppelelemente 20 stützen sich hierbei jeweils im Ausgangsbereich 14 der Tilgermassen-Trägerelemente 5a und 5b ab, also in demjenigen Bereich, der über den größten Radialabstand zur Zentralachse 15 verfügt.

Die Tilgermassen 7 weisen jeweils an ihren radial inneren Enden jeweils eine geometrische Anformung 28 auf, die im umfangsseitig mittleren Teil über einen ersten Kontaktbereich 26 verfügt, in den umfangsseitig äußeren Teilen dagegen über zweite Kontaktbereiche 27. Der erste Kontaktbereich 26 verfügt über eine Bereichsmitte 37, welche den ersten Kontaktbereich 29 in Anformunghälften 23 unterteilt. Diese geometrische Anformung 28 wirkt in nachfolgend noch zu beschreibender Weise mit radial innerhalb der Tilgermassen 7 vorgesehenen Anschlägen 31 zusammen, die an einem ringförmigen Bauteil 32 zusammen gefasst sind.

Das ringförmige Bauteil 32 verfügt in Umfangsrichtung zwischen je zwei Tilgermassen 7 über je eine Halterung 34, die jeweils ein Abstandsstück 11 umschließt, so dass die Halterung 34 jeweils als Anschlagaufnehmer 38 dient. Das ringförmige Bauteil 32 ist demnach drehfest an dem Tilgermassenträger 3 aufgenommen. Ein sich in Umfangsrichtung erstreckender Ringkörper 33 wirkt zwischen je zwei Anschlagaufnehmern 38 jeweils mit einem Anschlagprofil 40. Anschlagaufnehmer 38 und Anschlagprofile 40 bilden gemeinsam Anschläge 31 an dem ringförmigen Bauteil 32.

Wenn das Tilgersystem 1 mit einer Drehzahl betrieben wird, bei welcher die Fliehkraft die Gewichtskraft übersteigt, streben die Tilgermassen 7 unter der Wirkung der Fliehkraft nach radial außen, so dass sich die Koppelelemente 20 jeweils im Ausgangsbereich 24 der jeweiligen Führungsbahn 22 der Tilgermassen 7 positionieren können. Torsionsschwingungen können zwar Auslenkungen der Tilgermassen 7 in Umfangsrichtung erzwingen, wodurch die Koppelelemente 20 aus den Ausgangsbereichen 14, 24 der Führungsbahnen 13, 22 in deren Anschlussbereiche 17, 25 ausgelenkt werden, jedoch erfolgt bei abklingender Torsionsschwingung stets eine Rückstellung der Koppelelemente 20 in die Ausgangsposition unter der Wirkung der Fliehkraft.

Fällt die Fliehkraft dagegen unter die Gewichtskraft, beispielsweise bei einem Kriechbetrieb eines Kraftfahrzeuges oder beim Abstellen eines Antriebs, wie beispielsweise einer Brennkraftmaschine, dann fallen die Tilgermassen 7 nach radial innen, um die in Fig. 6 gezeigte Relativposition zueinander und zum Tilgermassenträger 3 einzunehmen. Bei einem solchen Betriebszustand fallen die beiden sich radial oberhalb der Zentralachse 15 befindlichen Tilgermassen 7 nach radial innen, bis ihre Anschlagseiten 43 mit der für die Bewegungsrichtung relevanten Anformungshälfte 23 des ersten Kontaktbereichs 26 in Anlage an dem zugeordneten Anschlagprofil 40 des Anschlags 31 am Ringkörper 33 des ringförmigen Bauteils 32 gekommen sind. Sollten die Führungsbahnen 13, 22 eine weitere Bewegung der Tilgermassen 7 nach radial unten zulassen, wird diese Bewegung erst dann enden, wenn der für die Bewegungsrichtung relevante zweite Umfangsbereich 27 der jeweiligen Tilgermasse 7 an der Halterung 34 und damit am Anschlagaufnehmer 38 des ringförmigen Bauteils 32 in Anlage gelangt ist. Die beiden sich radial unterhalb der Zentralachse 15 befindlichen Tilgermassen 7 fallen ebenfalls nach radial innen, bis ihre Anschlagseiten 43 mit den daran angeformten, für die Bewegungsrichtung relevanten ersten Kontaktbereichen 26 in Anlage an dem zugeordneten Anschlagprofil 40 des Anschlags 31 am Ringkörper 33 des ringförmigen Bauteils 32 gekommen sind, und bis zudem die für die Bewegungsrichtung relevanten zweiten Kontaktbereiche 27 der jeweiligen Tilgermassen 7 an den entsprechenden Halterungen 34 und damit an den Anschlagaufnehmern 38 des ringförmigen Bauteils 32 in Anlage gelangt sind. Auf diese Weise wird verhindert, dass die beiden sich radial unterhalb der Zentralachse 15 befindlichen Tilgermassen 7 mit ihren Umfangsseiten 42 in Anlage aneinander gelangen.

### Bezugszeichen

- 1: Tilgersystem
- 3: Tilgermassenträger
- 5: Tilgermassen-Trägerelemente
- 7: Tilgermassen
- 11: Abstandsstücke
- 13: Führungsbahnen
- 14: Ausgangsbereich
- 15: Zentralachse
- 17: Anschlussbereiche
- 20: Koppelelement
- 22: Führungsbahn
- 24: Ausgangsbereich
- 25: Anschlussbereich
- 26: Kontaktbereich
- 27: Kontaktbereich
- 28: geometrische Anformung
- 30: Schwingungsreduzierungseinrichtung
- 31: Anschlag
- 32: ringförmiges Bauteil
- 33: Ringkörper
- 34: Halterung
- 35: Tilgermassenzentrum
- 36: mittlerer Erstreckungsradius
- 37: Bereichsmitte
- 38: Anschlagaufnehmer
- 40: Anschlagprofil
- 42: Umfangsseite
- 43: Anschlagseite
- 52: Antrieb
- 54: Gehäuse
- 55: Gehäuseabschnitt
- 56: Kopplungsanordnung
- 60: hydrodynamischer Kreis
- 61: Pumpenrad
- 62: Turbinenrad
- 63: Leitrad
- 64: Kupplungseinrichtung
- 65: Kupplungskolben
- 66: Reibscheibenkupplung
- 67: Eingang
- 68: antriebsseitige erste Dämpfungseinheit
- 69: abtriebsseitige zweite Dämpfungseinheit
- 70: Torsionsschwingungsdämpfer
- 71: Torsionsschwingungs-Dämpfernabe
- 72: Ausgang
- 73: Abtrieb
- 74: Zwischenübertragung
- 76: Abtriebswelle
- 77: Verzahnung
- 78: Führung
- 79: Führungsbereich
- 80: Ansteuerelemente
- 82: Wandung
- 83: Einbuchtung
- 84: radial äußere Reibscheibenkupplung
- 85: radial innere Reibscheibenkupplung
- 87: radial innerer Reibscheiben-Kupplungsträger
- 88: radial äußerer Reibscheiben-Kupplungsträger
- 90: hydrodynamischer Drehmomentwandler
- 91: Basisbereich
- 92: Ausnehmungen
- 93: Verbindungseinrichtung
- 95: erste Leitung
- 96: zweite Leitung
- 98: erster Druckraum
- 99: zweiter Druckraum
- 100: erste Leitung
- 102: zweite Leitung
- 106: umfangsseitige Enden
- 108: Lagerung
- 109: erster Druckraum
- 110: zweiter Druckraum
- 113: Aufnahmebauteil
- 114: Ansteuerfinger
- 115: Eingangssegmente
- 116: Ansteuerelemente
- 117: Ausgangsbauteil
- 118: Ausgangsbauteil
- 120: Reibscheiben-Kupplungsträger
- 122: Vernietung
- 124: Gehäusedeckel
- 126: radial äußeres Energiespeichersystem
- 128: Energiespeicherfenster
- 130: radial inneres Energiespeichersystem
- 132: Energiespeicherfenster
- 134: Abstandsstücke
- 136: Relativdrehwinkelbegrenzung
- 138: Ausnehmungen
- 142: Axialfederung

## Patentansprüche

1. Schwingungsreduzierungseinrichtung einer Kopplungsanordnung (56), die einen Torsionsschwingungsdämpfer (70) mit einem an einen Antrieb (52) angebundenen Eingang (67) aufweist, der mittels Ansteuerelementen (80) zur Beaufschlagung eines Energiespeichersystems (126) zumindest einer Dämpfungseinheit (68) des Torsionsschwingungsdämpfers (70) in Umfangsrichtung dient, und zur Abstützung des Energiespeichersystems (126) der Dämpfungseinheit (68) nach radial außen eine Führung (78) aufweist, die mit den in den Erstreckungsbereich des Energiespeichersystems (126) ragenden Ansteuerelementen (80) zusammenwirkt, um das Energiespeichersystem (126) in Umfangsrichtung beaufschlagen zu können, wobei der Eingang (67) des Torsionsschwingungsdämpfers sowohl über die Führung (78) als auch über die Ansteuerelemente (80) für das Energiespeichersystem (126) der Dämpfungseinheit (68) verfügt, wobei der Eingang (67) des Torsionsschwingungsdämpfers (70) an dem Antrieb (57) befestigt ist, und die Führung (78) das Energiespeichersystem (126) zumindest entlang eines Teils der jeweiligen Axialerstreckung mit einem an die Außenkontur des Energiespeichersystems (126) formlich angepassten Führungsbereich (79) umgibt, wobei die Schwingungsreduzierungseinrichtung, aufgenommen in einem Gehäuse (54), im radialen Außenbereich eine Wandung (82) aufweist, wobei die Befestigung des Eingangs (67) des Torsionsschwingungsdämpfers (70) an einem Gehäuseabschnitt (55) des Gehäuses (54) erfolgt, der in einer Distanz gegenüber der Wandung (82) im radialen Außenbereich des Gehäuses (54) vorgesehen ist, wobei diese Distanz derart gewählt ist, dass die Führung (78) durch die im radialen Außenbereich des Gehäuses (54) vorliegende Wandung (82) eine Abstützung nach radial außen erfährt,
**dadurch gekennzeichnet, dass** die Wandung (82) im radialen Außenbereich des Gehäuses (54) für die Abstützung der Führung (78) nach radial außen über eine Einbuchtung (83) verfügt, in welche die Führung (78) zumindest entlang eines Teils ihrer Axialerstreckung eintaucht.

2. Schwingungsreduzierungseinrichtung nach Anspruch 1, **dadurch gekennzeichnet, dass** der Eingang (67) des Torsionsschwingungsdämpfers (70) einen zur Befestigung an dem Gehäuse (54) vorgesehenen Basisbereich (91) aufweist, von welchem ausgehend sich sowohl der Führungsbereich (79) der Führung (78) als auch die Ansteuerelemente (80) in Richtung zu dem Energiespeichersystem (126) der Dämpfungseinheit (68) erstrecken.

3. Schwingungsreduzierungseinrichtung nach Anspruch 2, **dadurch gekennzeichnet, dass** der Basisbereich (91) des Eingangs (67) des Torsionsschwingungsdämpfers (70) über Ausnehmungen (92) verfügt, die zur Aufnahme jeweils einer die Befestigung am Gehäuse (54) realisierenden Verbindungseinrichtung (93) vorgesehen sind.

4. Schwingungsreduzierungseinrichtung nach Anspruch 1 und 3, **dadurch gekennzeichnet, dass** der Eingang (67) des Torsionsschwingungsdämpfers (70) über eine Mehrzahl von Eingangssegmenten (115) mit in Umfangsrichtung begrenzter Ausdehnung verfügt, bei welchen sich die Ausnehmungen (92) für die jeweilige Verbindungseinrichtung (93) und/oder die Ansteuerelemente (80) jeweils an den umfangsseitigen Enden (106) oder zumindest im umfangsseitigen Erstreckungsbereich dieser Enden (106) befinden.

5. Schwingungsreduzierungseinrichtung nach Anspruch 1, deren Ausgang (72) mit einer Kupplungseinrichtung (64) verbunden ist, durch welche in einem ersten Betriebszustand eine Verbindung zwischen dem Antrieb (52) und einem Abtrieb (73) zumindest im Wesentlichen hergestellt ist, und in einem zweiten Betriebszustand diese Verbindung zumindest im Wesentlichen aufgehoben ist, **dadurch gekennzeichnet, dass** ein mit dem Torsionsschwingungsdämpfer (70) zusammen wirkendes Tilgersystem (1) vorgesehen ist, das mit dem Ausgang (72) des Torsionsschwingungsdämpfers (70) verbunden ist.

6. Schwingungsreduzierungseinrichtung nach Anspruch 5 mit einem zentriert, aber in Umfangsrichtung relativ drehbar aufgenommen Torsionsschwingungsdämpfer(70), **dadurch gekennzeichnet, dass** die Zentrierung des Torsionsschwingungsdämpfers (70) an dem Abtrieb (73) mittels einer Lagerung (108) erfolgt.

7. Schwingungsreduzierungseinrichtung nach Anspruch 5, bei welchem der Torsionsschwingungsdämpfer (70) mit zumindest einer Reibscheibenkupplung (66; 84, 85) der Kupplungseinrichtung (64) verbunden ist, die im ersten Betriebszustand unter der Wirkung eines der Kupplungseinrichtung (64) zugeordneten Kupplungskolbens (65) gegen ein mit dem Abtrieb (73) drehfestes Aufnahmebauteil (113) gepresst ist, während der Kupplungskolben (65) im zweiten Betriebszustand zugunsten einer wenigstens teilweisen Aufhebung der Wirkverbindung zwischen der zumindest einen Reibscheibenkupplung (66; 84, 85) und dem Aufnahmebauteil (113) die zumindest eine Reibscheibenkupplung (66; 84, 85) zumindest im Wesentlichen frei gibt.

8. Schwingungsreduzierungseinrichtung nach Anspruch 5, bei welcher der Torsionsschwingungsdämpfer (70) zumindest eine Dämpfungseinheit (69) aufweist, deren Ausgang (72) wenigstens zwei Ausgangsbauteile (117, 118) umfasst, von denen wenigstens ein Ausgangsbauteil (117, 118) zentriert, aber in Umfangsrichtung drehbewegbar aufgenommen ist, **dadurch gekennzeichnet, dass** wenigstens ein Ausgangsbauteil (118) eine Verbindung mit einem zur Aufnahme von Tilgermassen (7) vorgesehenen Tilgermassenträger (3) des Tilgersystems (1) aufweist.

9. Schwingungsreduzierungseinrichtung nach Anspruch 8, **dadurch gekennzeichnet, dass** wenigstens ein Ausgangsbauteil (117) des Ausgangs (72) als Reibscheiben-Kupplungsträger (120; 88) der Kupplungseinrichtung (64) vorgesehen ist, welcher die zumindest eine Reibscheibenkupplung (66; 84, 85) der Kupplungseinrichtung (64) drehfest aufnimmt.

10. Schwingungsreduzierungseinrichtung nach Anspruch 8 mit einem Torsionsschwingungsdämpfer (70), der eine Mehrzahl von Dämpfungseinheiten (68, 69) aufweist, von denen die jeweils antriebsseitige Dämpfungseinheit (68) über eine Zwischenübertragung (74) mit der jeweils abtriebsseitigen Dämpfungseinheit (69) in Wirkverbindung steht, **dadurch gekennzeichnet, dass** die Zwischenübertragung (74) bei der abtriebsseitigen Dämpfungseinheit (69) als Eingang wirksam ist.

11. Schwingungsreduzierungseinrichtung nach Anspruch 8, **dadurch gekennzeichnet, dass** das Tilgersystem (1) über einen Reibscheiben-Kupplungsträger (88) verfügt, welcher die zumindest eine Reibscheibenkupplung (84, 85) der Kupplungseinrichtung (64) drehfest aufnimmt.

12. Kopplungsanordnung mit einer Schwingungsreduzierungseinrichtung nach Anspruch 1, deren Ausgang (72) mit einer Kupplungseinrichtung (64) verbunden ist, durch welche in einem ersten Betriebszustand eine Verbindung zwischen dem Antrieb (52) und einem Abtrieb (73) zumindest im Wesentlichen hergestellt ist, und in einem zweiten Betriebszustand diese Verbindung zumindest im Wesentlichen aufgehoben ist, **dadurch gekennzeichnet, dass** die Schwingungsreduzierungseinrichtung (30) ein mit dem Torsionsschwingungsdämpfer (70) zusammen wirkendes Tilgersystem (1) aufweist, das mit einer Zwischenübertragung (74) verbunden ist, welche zwischen einer antriebsseitigen ersten Dämpfungseinheit (68) und einer abtriebsseitigen zweiten Dämpfungseinheit (69) des Torsionsschwingungsdämpfers (70) der Schwingungsreduziereinrichtung (30) verbunden ist.

## Claims

1. Vibration-reducing device of a coupling arrangement (56), which vibration-reducing device has a torsional vibration damper (70) with an input (67) which is connected to a drive (52) and serves, by means of actuation elements (80), to act on an energy storage system (126) of at least one damping unit (68) of the torsional vibration damper (70) in the circumferential direction, and has a guide (78) for supporting the energy storage system (126) of the damping unit (68) radially towards the outside, which guide interacts with the actuation elements (80), which protrude into the region of extent of the energy storage system (126), in order to be able to act on the energy storage system (126) in the circumferential direction, wherein the input (67) of the torsional vibration damper has both the guide (78) and the actuation elements (80) for the energy storage system (126) of the damping unit (68), wherein the input (67) of the torsional vibration damper (70) is fastened to the drive (57), and the guide (78) surrounds the energy storage system (126) at least along part of the respective axial extent by way of a guide region (79) which is matched in terms of shape to the outer contour of the energy storage system (126), wherein the vibration-reducing device, accommodated in a housing (54), has a wall (82) in the radial outer region, wherein the input (67) of the torsional vibration damper (70) is fastened to a housing section (55) of the housing (54), which housing section is provided at a distance from the wall (82) in the radial outer region of the housing (54), wherein this distance is selected in such a way that the guide (78) is supported radially towards the outside by the wall (82) which is present in the radial outer region of the housing (54),
**characterized in that** the wall (82) in the radial outer region of the housing (54) has an indentation (83), which the guide (78) enters at least along part of its axial extent, for supporting the guide (78) radially towards the outside.

2. Vibration-reducing device according to Claim 1, **characterized in that** the input (67) of the torsional vibration damper (70) has a base region (91) which is provided for fastening to the housing (54), both the guide region (79) of the guide (78) and also the actuation elements (80) extending, starting from the said base region, in the direction of the energy storage system (126) of the damping unit (68).

3. Vibration-reducing device according to Claim 2, **characterized in that** the base region (91) of the input (67) of the torsional vibration damper (70) has recesses (92) which are provided for receiving in each case one connecting device (93) which implements the fastening to the housing (54).

4. Vibration-reducing device according to Claims 1 and 3, **characterized in that** the input (67) of the torsional vibration damper (70) has a plurality of input segments (115) with an extent which is limited in the circumferential direction, in the case of which input segments the recesses (92) for the respective connecting device (93) and/or the actuation elements (80) are respectively located at the circumferential ends (106) or at least in the circumferential region of extent of these ends (106).

5. Vibration-reducing device according to Claim 1, the output (72) of which is connected to a clutch device (64) by way of which a connection between the drive (52) and an output drive (73) is at least substantially established in a first operating state and this connection is at least substantially broken in a second operating state, **characterized in that** an absorber system (1) which interacts with the torsional vibration damper (70) and is connected to the output (72) of the torsional vibration damper (70) is provided.

6. Vibration-reducing device according to Claim 5, comprising a torsional vibration damper (70) which is received in a centred manner but relatively rotatably in the circumferential direction, **characterized in that** the torsional vibration damper (70) is centred on the output drive (73) by means of a bearing (108).

7. Vibration-reducing device according to Claim 5, in which the torsional vibration damper (70) is connected to at least one friction disc clutch (66; 84, 85) of the clutch device (64), which friction disc clutch is pressed against a receiving component (113), which is rotationally fixed to the output drive (73), under the action of a clutch piston (65), which is associated with the clutch device (64), in the first operating state, whereas the clutch piston (65) at least substantially releases the at least one friction disc clutch (66; 84, 85) to assist with at least partially breaking the operative connection between the at least one friction disc clutch (66; 84, 85) and the receiving component (113) in the second operating state.

8. Vibration-reducing device according to Claim 5, in which the torsional vibration damper (70) has at least one damping unit (69), the output (72) of which comprises at least two output components (117, 118), at least one of which centres an output component (117, 118) but is received rotatably in the circumferential direction, **characterized in that** at least one output component (118) has a connection to an absorber mass carrier (3) of the absorber system (1), which absorber mass carrier is provided for receiving absorber masses (7).

9. Vibration-reducing device according to Claim 8, **characterized in that** at least one output component (117) of the output (72) is provided as a friction disc clutch carrier (120; 88) of the clutch device (64), which friction disc clutch carrier receives the at least one friction disc clutch (66; 84, 85) of the clutch device (64) in a rotationally fixed manner.

10. Vibration-reducing device according to Claim 8, comprising a torsional vibration damper (70) which has a plurality of damping units (68, 69), the respective drive-side damping unit (68) of which is operatively connected to the respective output drive-side damping unit (69) via an intermediate transmission means (74), **characterized in that** the intermediate transmission means (74) acts as an input for the output drive-side damping unit (69).

11. Vibration-reducing device according to Claim 8, **characterized in that** the absorber system (1) has a friction disc clutch carrier (88) which receives the at least one friction disc clutch (84, 85) of the clutch device (64) in a rotationally fixed manner.

12. Coupling arrangement comprising a vibration-reducing device according to Claim 1, the output (72) of which vibration-reducing device is connected to a clutch device (64) by way of which a connection between the drive (52) and an output drive (73) is at least substantially established in a first operating state and this connection is at least substantially broken in a second operating state, **characterized in that** the vibration-reducing device (30) has an absorber system (1) which interacts with the torsional vibration damper (70) and is connected to an intermediate transmission means (74) which is connected between a drive-side first damping unit (68) and an output drive-side second damping unit (69) of the torsional vibration damper (70) of the vibration-reducing device (30).

## Revendications

1. Dispositif de réduction de vibrations d'un ensemble d'accouplement (56), qui comprend un amortisseur de vibrations de torsion (70) doté d'une entrée (67) reliée à un entraînement (52), laquelle entrée sert, au moyen d'éléments de commande (80), à solliciter un système d'accumulation d'énergie (126) d'au moins une unité d'amortissement (68) de l'amortisseur de vibrations de torsion (70) dans la direction périphérique, et comprend, pour supporter le système d'accumulation d'énergie (126) de l'unité d'amortissement (68) radialement vers l'extérieur, un guide (78) qui coopère avec les éléments de commande (80) faisant saillie dans la région d'étendue du système d'accumulation d'énergie (126), afin de pouvoir solliciter le système d'accumulation d'énergie (126) dans la direction périphérique, l'entrée (67) de l'amortisseur de vibrations de torsion comportant à la fois le guide (78) et les éléments de commande (80) pour le système d'accumulation d'énergie (126) de l'unité d'amortissement (68), l'entrée (67) de l'amortisseur de vibrations de torsion (70) étant fixée à l'entraînement (57), et le guide (78) entourant le système d'accumulation d'énergie (126) au moins le long d'une partie de l'étendue axiale respective par une région de guidage (79) adaptée par sa forme au contour extérieur du système d'accumulation d'énergie (126), le dispositif de réduction de vibrations, logé dans un boîtier (54), comprenant une paroi (82) dans la région extérieure radiale, la fixation de l'entrée (67) de l'amortisseur de vibrations de torsion (70) à une partie (55) du boîtier (54) ayant lieu, laquelle partie de boîtier est prévue à une distance de la paroi (82) dans la région extérieure radiale du boîtier (54), cette distance étant sélectionnée de telle sorte que le guide (78) subit un support radialement vers l'extérieur au moyen de la paroi (82) présente dans la région extérieure radiale du boîtier (54),
**caractérisé en ce que** la paroi (82) comporte, dans la région extérieure radiale du boîtier (54), pour le support du guide (78) radialement vers l'extérieur, un renfoncement (83) dans lequel le guide (78) pénètre au moins le long d'une partie de son étendue axiale.

2. Dispositif un de réduction de vibrations selon la revendication 1, **caractérisé en ce que** l'entrée (67) de l'amortisseur de vibrations de torsion (70) comprend une région de base (91) prévue pour la fixation au boîtier (54), région à partir de laquelle à la fois la région de guidage (79) du guide (78) et les éléments de commande (80) s'étendent en direction du système d'accumulation d'énergie (126) de l'unité d'amortissement (68).

3. Dispositif de réduction de vibrations selon la revendication 2, **caractérisé en ce que** la région de base (91) de l'entrée (67) de l'amortisseur de vibrations de torsion (70) comporte des évidements (92) qui sont prévus pour le logement respectivement d'un dispositif de liaison (93) réalisant la fixation au boîtier (54).

4. Dispositif de réduction de vibrations selon les revendications 1 et 3, **caractérisé en ce que** l'entrée (67) de l'amortisseur de vibrations de torsion (70) comporte une pluralité de segments d'entrée (115) présentant une étendue limitée dans la direction périphérique, segments dans lesquels les évidements (92) pour le dispositif de liaison (93) respectif et/ou les éléments de commande (80) se trouvent respectivement aux extrémités (106) côté périphérie ou au moins dans la région d'étendue côté périphérie de ces extrémités (106).

5. Dispositif de réduction de vibrations selon la revendication 1, dont la sortie (72) est reliée à un dispositif d'embrayage (64) au moyen duquel, dans un premier état de fonctionnement, une liaison entre l'entraînement (52) et une prise de force (73) est produite au moins sensiblement et, dans un deuxième état de fonctionnement, cette liaison est au moins sensiblement supprimée, **caractérisé en ce qu'**un système d'amortissement (1) coopérant avec l'amortisseur de vibrations de torsion (70) est prévu, lequel système d'amortissement est relié à la sortie (72) de l'amortisseur de vibrations de torsion (70).

6. Dispositif de réduction de vibrations selon la revendication 5, doté d'un amortisseur de vibrations de torsion (70) logé de manière centrée mais rotative relativement dans la direction périphérique, **caractérisé en ce que** le centrage de l'amortisseur de vibrations de torsion (70) au niveau de la prise de force (73) s'effectue au moyen d'un palier (108).

7. Dispositif de réduction de vibrations selon la revendication 5, dans lequel l'amortisseur de vibrations de torsion (70) est relié à au moins un embrayage à disques de friction (66 ; 84, 85) du dispositif d'embrayage (64) qui, dans le premier état de fonctionnement, sous l'effet d'un piston d'embrayage (65) associé au dispositif d'embrayage (64), est pressé contre un composant de logement (113) solidaire en rotation avec la prise de force (73), tandis que le piston d'embrayage (65), dans le deuxième état de fonctionnement, en faveur d'une suppression au moins partielle de la liaison fonctionnelle entre l'au moins un embrayage à disques de friction (66 ; 84, 85) et le composant de logement (113), libère l'au moins un embrayage à disques de friction (66 ; 84, 85) au moins sensiblement.

8. Dispositif de réduction de vibrations selon la revendication 5, dans lequel l'amortisseur de vibrations de torsion (70) comprend au moins une unité d'amortissement (69) dont la sortie (72) comporte au moins deux composants de sortie (117, 118), parmi lesquels au moins un composant de sortie (117, 118) est logé de manière centrée, mais mobile en rotation dans la direction périphérique, **caractérisé en ce qu'**au moins un composant de sortie (118) comprend une liaison avec un support de masse d'amortissement (3), prévu pour le logement de masses d'amortissement (7), du système d'amortissement (1).

9. Dispositif de réduction de vibrations selon la revendication 8, **caractérisé en ce qu'**au moins un composant de sortie (117) de la sortie (72) est prévu en tant que support d'embrayage à disques de friction (120 ; 88) du dispositif d'embrayage (64), lequel loge l'au moins un embrayage à disques de friction (66 ; 84, 85) du dispositif d'embrayage (64) de manière bloquée en rotation.

10. Dispositif de réduction de vibrations selon la revendication 8, comportant un amortisseur de vibrations de torsion (70) qui comprend une pluralité d'unités d'amortissement (68, 69), parmi lesquelles l'unité d'amortissement (68) respectivement côté entraînement est en liaison fonctionnelle avec l'unité d'amortissement (69) respectivement côté prise de force par le biais d'une transmission intermédiaire (74), **caractérisé en ce que** la transmission intermédiaire (74) agit comme entrée pour l'unité d'amortissement (69) côté prise de force.

11. Dispositif de réduction de vibrations selon la revendication 8, **caractérisé en ce que** le système d'amortissement (1) comporte un support d'embrayage à disques de friction (88), lequel loge de manière bloquée en rotation l'au moins un embrayage à disques de friction (84, 85) du dispositif d'embrayage (64).

12. Ensemble d'accouplement comportant un dispositif de réduction de vibrations selon la revendication 1, dont la sortie (72) est reliée à un dispositif d'embrayage (64) au moyen duquel, dans un premier état de fonctionnement, une liaison entre l'entraînement (52) et une prise de force (73) est produite au moins sensiblement et, dans un deuxième état de fonctionnement, cette liaison est au moins sensiblement supprimée, **caractérisé en ce que** le dispositif de réduction de vibrations (30) comprend un système d'amortissement (1) coopérant avec l'amortisseur de vibrations de torsion (70), lequel système d'amortissement est relié à une transmission intermédiaire (74), laquelle est reliée entre une première unité d'amortissement (68) côté entraînement et une deuxième unité d'amortissement (69), côté prise de force, de l'amortisseur de vibrations de torsion (70) du dispositif de réduction de vibrations (30).
